# EUROPÄISCHE PATENTSCHRIFT

(11) **EP 1 112 937 B1**
(45) Veröffentlichungstag und Bekanntmachung des Hinweises auf die Patenterteilung: **15.09.2004**
(21) Anmeldenummer: 00125749.2
(22) Anmeldetag: 24.11.2000
(51) Int. Cl.: B65B 51/14

(54) **Vorrichtung zum thermischen Siegeln von Faltlappen**
Device for heat-sealing of folding flaps
Dispositif pour thermosceller des volets de pliage

(30) Priorität: 03.01.2000 DE 10000052
(43) Veröffentlichungstag der Anmeldung: 04.07.2001
(73) Patentinhaber: Focke & Co. (GmbH & Co.), 27283 Verden (DE)
(72) Erfinder: Focke, Heinz, 27283 Verden (DE); Roesler, Burkard, 27337 Blender (DE)
(74) Vertreter: Bolte, Erich, Dipl.-Ing.

(56) Entgegenhaltungen:
- CH-A- 380 364

## Beschreibung

Die Erfindung betrifft eine Vorrichtung zum Herstellen bzw. Verschließen von Packungen mit mehrlagigen Faltlappen durch thermisches Siegeln mit Hilfe von beheizten Siegelbacken, insbesondere zum Verschließen von Folien-Beuteln mit Schließlappen. Ein solche Vorrichtung ist z.B. aus der CH-A-380364 bekannt.

Das Siegeln von Folien aus thermoplastischem Material bereitet Schwierigkeiten, wenn die zu siegelnden Flächen ungleichförmige Dicken aufweisen. Dies gilt für Faltlappen oder Schließlappen von Packungen bzw. Beuteln, die aufgrund von Faltungen in Teilbereichen mehrlagig aufgebaut sind.

Der Erfindung liegt die Aufgabe zugrunde, eine Vorrichtung zum Siegeln von Faltlappen, Schließlappen oder dergleichen vorzuschlagen, die insbesondere geeignet ist, Bereiche unterschiedlicher Dicke der Faltlappen oder Schließlappen auszugleichen, derart, dass trotz dieser Dickenunterschiede eine gleichförmige Siegelfläche oder Siegelnaht geschaffen wird.

Zur Lösung dieser Aufgabe ist die erfindungsgemäße Vorrichtung durch folgende Merkmale gekennzeichnet:
a) eine Siegelstation durch welche die Packungen bzw. Beutel taktweise hindurchförderbar sind mit mehreren aufeinanderfolgenden Einheiten aus beheizter Siegelbacke einerseits und nicht beheizter Gegenbacke andererseits, zwischen denen die Faltlappen oder Schließlappen zum Siegeln Aufnahme finden,
b) die Siegelbacken und Gegenbacken sind von Einheit zu Einheit auf wechselnden Seiten von Faltlappen oder Schließlappen positioniert, derart, dass im Bereich der einen Einheit die Siegelbacken auf der einen und im Bereich der nächsten Einheit die Siegelbacken auf der gegenüberliegenden Seite der Faltlappen oder Schließlappen positioniert sind.

Günstige Siegelergebnisse werden insbesondere bei mehrlagigen Folien bzw. Lappen durch aufeinanderfolgendes Siegeln an gegenüberliegenden Seiten der Folie erreicht. Besonders exakte Siegelbereiche werden erzielt, wenn erfindungsgemäß mindestens die (nicht beheizte) Gegenbacke eine elastische Anlagefläche aufweist, zum Beispiel aus einem Silikonstreifen. Die Siegelbacke drückt in diesem Falle den zu siegelnden Bereich der Folie bzw. des Faltlappens oder Schließlappens gegen den elastischen Bereich der Gegenbacke.

Ein Getriebe zur Betätigung der Siegelbacke oder des Gegenbacke ist nach Maßgabe des Anspruchs 6 ausgebildet.

Die Besonderheit dieses Getriebes besteht darin, dass komplette und störanfällige bzw. mit besonderer Schmierung ausgerüstete Kurvenscheiben zur Steuerung der Bewegung der Siegelbacken vermieden werden. Das kurbelartige Getriebe, welches aufgrund der besonderen Verbindung mit einem Betätigungsarm eine Stillstandsphase gewährleistet bei kontinuierlicher Weiterdrehung, ist im Aufbau einfach und wenig störanfällig.

Weitere Einzelheiten der Erfindung werden nachfolgend anhand von Ausführungsbeispielen näher erläutert. Es zeigt:
- Fig. 1: eine Siegelvorrichtung mit besonderem Getriebe in Seitenansicht, teilweise im Vertikalschnitt,
- Fig. 2: die Vorrichtung gemäß Fig. 1 bei veränderter Relativstellung von Organen,
- Fig. 3: eine Siegelstation als Einzelheit der Fig. 1 in vergrößertem Maßstab,

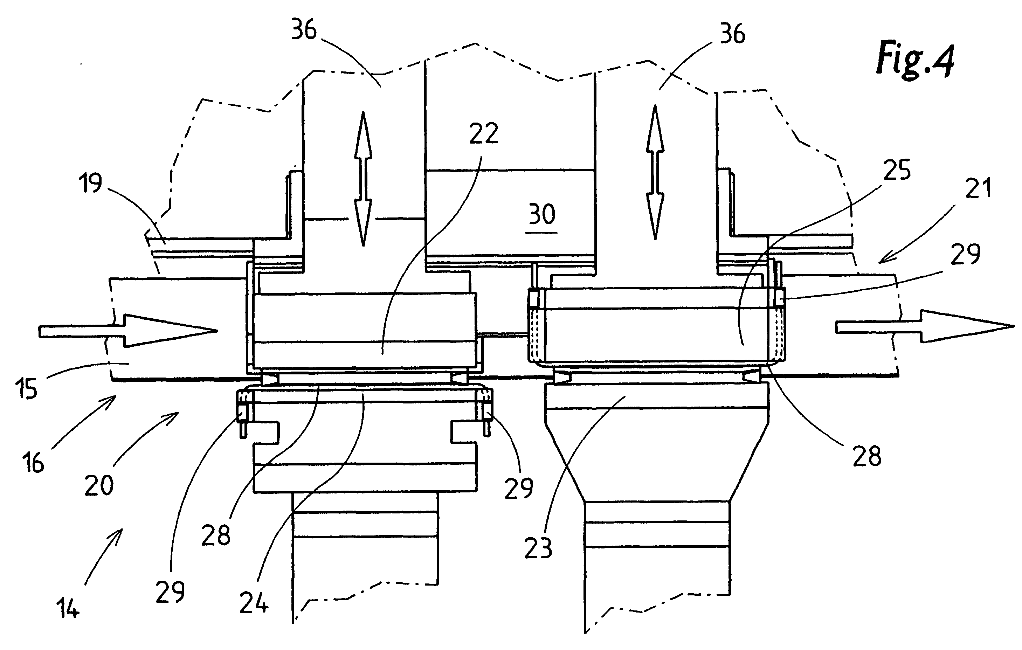

- Fig. 4: die Siegelstation gemäß Fig. 3 in Draufsicht entsprechend Pfeil IV.

Das in den Zeichnungen dargestellte Ausführungsbeispiel bezieht sich auf die Herstellung bzw. auf das Verschließen von Packungen besonderen Typs, nämlich von (Tabak-)Beuteln 10 aus thermisch siegelbarer Folie. Es handelt sich hier um einen Beutel 10 in der Ausführung mit Seitenfalte. Im Bereich einer Entnahmeöffnung ist der Beutel 10 mit einem lang gestreckten Schließlappen versehen. Dieser wird gegen eine (nach oben gerichtete) Vorderseite 12 des Beutels 10 umgefaltet und beispielsweise durch ein Tape oder dergleichen mit der Vorderseite 12 verbunden.

Der Schließlappen 11 ist mit einem (kürzeren) Gegenlappen 13 zu verbinden. Schließlappen 11 und Gegenlappen 13 werden entlang einer durchgehenden, streifenförmigen Siegelnaht durch Übertragung von Wärme und Druck miteinander verbunden.

Der Beutel 10 bzw. dessen Folie kann so ausgebildet sein, dass die Wandungen, einschließlich Schließlappen 11 und Gegenlappen 13, aus jeweils äußeren Lagen aus dünner Folie und dazwischen positioniertem Zuschnitt aus Papier bestehen. Der Beutel 10 kann aber auch aus einlagiger Folie gebildet sein.

Durch eine Seitenfalte entsteht im Bereich von Schließlappen 11 und Gegenlappen 13 randseitig ein mehrlagiger Bereich. Die Seitenfalte ist in diesem Bereich V- oder M-förmig nach innen gefaltet. In diesem Bereich bilden Schließlappen 11 und Gegenlappen 13 somit mindestens vier Lagen, außerhalb dieses Bereichs zwei Lagen. Die Siegelnaht soll sich über die volle Breite der Öffnung erstrecken, also auch im Bereich der V- bzw. M-förmigen Faltung.

Zum Herstellen der Siegelnaht wird der gefüllte und entsprechend vorbereitete Beutel 10 in eine Siegelstation 14 gefördert. Die Beutel 10 liegen zu diesem Zweck auf einem Obergurt 15 eines endlosen Packungsförderers 16. Dieser ist in Taschen unterteilt durch quer gerichtete Trennwände 17. Die Beutel 10 sind so auf dem Obergurt 15 bzw. in den Taschen positioniert, dass Schließlappen 11 und Gegenlappen 13 seitwärts gerichtet sind und über den Packungsförderer 16 hinweg ragen. Eine Bodenfläche 18 des Beutels 10 ist einer ortsfesten, winkelförmigen Seitenführung im Bereich der Siegelstation 14 zugekehrt.

In der Siegelstation 14 sind Siegelorgane vorgesehen, die in mehreren aufeinanderfolgenden Siegeltakten die Schließnaht herstellen, bei dem vorliegenden Ausführungsbeispiel in zwei Siegeltakten. Die Siegelung wird durch Siegeleinheiten 20, 21 ausgeführt. Jede Siegeleinheit 20, 21 besteht aus einer Siegelbacke 22, 23 und einer Gegenbacke 24, 25. Die Siegelbacken 22, 23 sind jeweils beheizt. Die Gegenbacken 24, 25 sind unbeheizt, können ggf. gekühlt werden.

Die Beutel 10 werden durch entsprechende Fördertakte des Packungsförderers 16 so in die Siegelstation 14 transportiert, dass sich während des Stillstands des Packungsförderers 16 jeweils ein Beutel 10 im Bereich der einen und anderen Siegeleinheit 20, 21 befindet. Die Schließlappen 11 der flach auf dem Obergurt 15 liegenden Beutel 10 sind zur freien Seite gerichtet und liegen in einer schrägen aufrechten Ebene. Entsprechend sind die Siegelbacken 22, 23 einerseits und die Gegenbacken 24, 25 andererseits in einer schräg liegenden Ebene von etwa 30° positioniert. Schließlappen 11 und Gegenlappen 13 finden jeweils Aufnahme zwischen einer Siegelbacke 22, 23 einerseits und einer Gegenbacke 24, 25 andererseits.

Eine Besonderheit besteht darin, dass nur die auf einer Seite der zu siegelnden Teile angeordneten Organe bewegbar sind. Bei der Siegeleinheit 20 ist die Siegelbacke 22 bewegbar und die Gegenbacke 24 feststehend positioniert. Bei der Siegeleinheit 21 ist die Gegenbacke 25 auf der Seite der Siegelbacke 22 angeordnet und bewegbar, während die neben der Gegenbacke 24 positionierte Siegelbacke 23 feststehend angeordnet ist. Die jeweils beweglichen Organe sind hin- und hergehend in der schrägen Ebene entsprechend Doppelpfeil 26 bewegbar.

Die Siegelbacken 22, 23 weisen eine ebene, insbesondere metallische Siegelfläche 27 auf entsprechend der herzustellenden Siegelung bzw. Siegelnaht. In besonderer Weise sind die Gegenbacken 24, 25 ausgebildet. Diese weisen eine elastische nachgiebige Druck- bzw. Anlagefläche für die Folie auf. Bei dem vorliegenden Ausführungsbeispiel wird diese Anlagefläche durch einen Streifen 28 aus elastischem Werkstoff gebildet, insbesondere Silikon. Dieser Streifen 28 ist U-förmig über eine Stirnfläche der Gegenbacke 24, 25 gelegt und im Bereich von Seitenflächen durch eine Halterung 29 verankert. Durch diese Ausgestaltung der Gegenbacke 24, 25 werden Unebenheiten im Bereich der zu siegelnden Flächen ausgeglichen, insbesondere aufgrund von Seitenfalten. Etwaige Erhöhungen werden durch die (starre) Siegelfläche 27 der Siegelbacke 22, 23 in das elastisch verformbare Gegenorgan gedrückt.

Die bewegbaren Organe, nämlich Siegelbacke 22 einerseits und Gegenbacke 25 andererseits sind einzeln oder vorzugsweise gemeinsam oberhalb der Bewegungsbahn der Beutel 10 bewegbar. Zum Schutz gegen unerwünschte Wärmeübertragung ist mindestens im Bereich der Siegelbacke 22 eine ortsfeste Abdeckung 30 oberhalb der Beutel 10 angebracht. Die Siegelbacke 22 und entsprechend die Gegenbacke 25 ist in einem Endbereich konturiert ausgebildet unter Anpassung an die Form der Beutel 10 bzw. der Abdeckung 30.

Die bewegbaren Organe, nämlich Siegelbacke 22 und Gegenbacke 25, sind durch ein besonderes Betätigungsgetriebe 31 bewegbar. Dieses besteht aus einem schwenkbaren Tragorgan für Siegelbacke 22 bzw. Gegenbacke 25. Es handelt sich dabei um einen abgewinkelten, einarmigen Betätigungsarm 32. Ein von Siegelbacke 22 bzw. Gegenbacke 25 entferntliegender, aufrechter Schenkel 33 ist mit einem Lager 34 schwenkbar mit einer Tragvorrichtung verbunden, nämlich mit einer (horizontalen) Tragplatte 35. Ein anderer Schenkel 36 dient als Träger für die Siegelbacke 22 oder Gegenbacke 25. Der Schenkel 36 ist unter einem spitzen Winkel, nämlich schräg nach unten weisend, mit dem Schenkel 33 verbunden. Bei einer Schwenkbewegung des Betätigungsarms 32 um das Lager 34 wird der Schenkel 36 etwa in der durch Doppelpfeil 26 gekennzeichneten Ebene bewegt.

Der Betätigungsarm 32 ist mit dem Betätigungsgetriebe 31 verbunden, welches kontinuierlich drehend bzw. umlaufend angetrieben ist, insbesondere von einem zentralen Maschinenantrieb. Das Betätigungsgetriebe 31 besteht aus einem kontinuierlich drehend angetriebenen Antriebsorgan in Gestalt eines Kurbeltriebs 37. Ein Kurbelarm 38 wird von einer feststehenden Welle 39 drehend angetrieben. Die Welle 39 ist ortsfest positioniert. Ein auf der Welle 39 angeordneter Ring 40 ist mit einem ringförmigen Wälzlager 41 verbunden. Dieses wiederum ist drehbar in einer großformatigen Lageröffnung 42 des Kurbelarms 38 gelagert. Bei (kontinuierlicher) Drehung der Welle 39 wird über den Ring 40 eine entsprechende Drehbewegung auf das Wälzlager 41 übertragen. Dieses ist versetzt bzw. außermittig zur Welle 39 positioniert, so dass eine pendelnde Bewegung auf den Kurbelarm 38 übertragen wird.

Der Kurbelarm 38 ist mit einem oberen bzw. von der Welle 39 entferntliegenden Ende mit einem Koppelgetriebe 43 verbunden, welches die gleichförmige, kontinuierliche Kurbelbewegung des Kurbeltriebs 37 auf Siegelbacke 22 bzw. Gegenbacke 25 derart überträgt, dass einerseits eine hin- und hergehende Bewegung dieser Organe und andererseits ein zeitweiliger Stillstand derselben gegeben ist, nämlich während des Siegelns. Zu diesem Zweck ist das Koppelgetriebe 43 durch einen Lenker 44 mit dem Betätigungsarm 32 verbunden, und zwar im Bereich eines an einem Eckpunkt der Schenkel 33, 36 gebildeten Lagers 45.

Das andere Ende des Lenkers 44 ist ebenfalls über ein Schwenklager 46 mit dem Koppelgetriebe 43 verbunden.

Das Koppelgetriebe 43 weist ein (erstes) Koppelglied 47 auf. Dieses ist um ein Festlager 48 schwenkbar nach Maßgabe der Bewegung des Kurbelarms 38. Das Koppelglied 47 ist im vorliegenden Falle im Uhrzeigersinn um das Festlager 48 drehbar.

Das Ende des Kurbelarms 38 ist über ein Drehlager 49 mit dem Koppelglied 47 verbunden, und zwar mit Abstand von dem Festlager 48.

Mit dem (ersten) Koppelglied 47 ist ein (zweites) Koppelglied 50 verbunden über ein Drehlager 51. Dieses ist mit Abstand sowohl vom Festlager 48 als auch vom Drehlager 49 angeordnet. Das Koppelglied 50 ist annähernd dreieckförmig ausgebildet. Zum einen ist über das Schwenklager 46 der Lenker 44 mit diesem Koppelglied 50 verbunden. Des Weiteren ist über ein Lager 52 ein Festpunkt für das Koppelgetriebe 43 geschaffen. Es handelt sich dabei um ein (weiteres) Festlager 53, mit dem das Koppelgetriebe 43 über einen weiteren Lenker 54 verbunden ist. Das Koppelglied 50 ist demnach frei beweglich gelagert, nämlich jeweils drehbar bzw. schwenkbar um die Lager 46, 51, 52. Auch der Lenker 54 ist dabei schwenkbar um das Festlager 53.

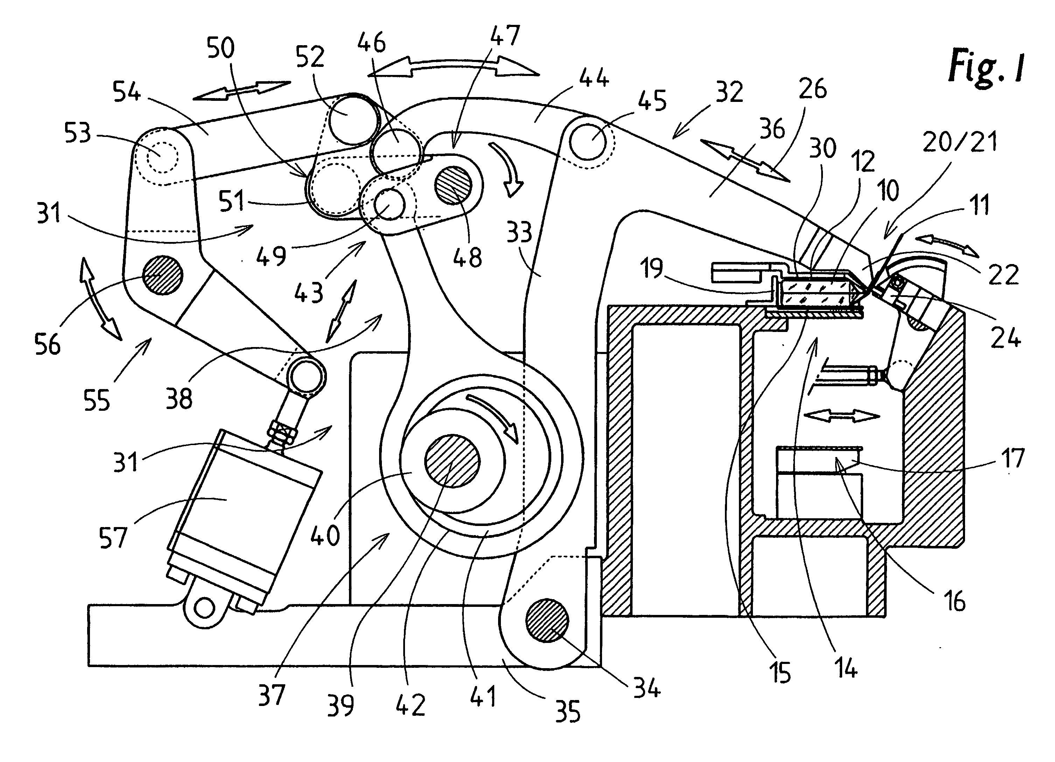

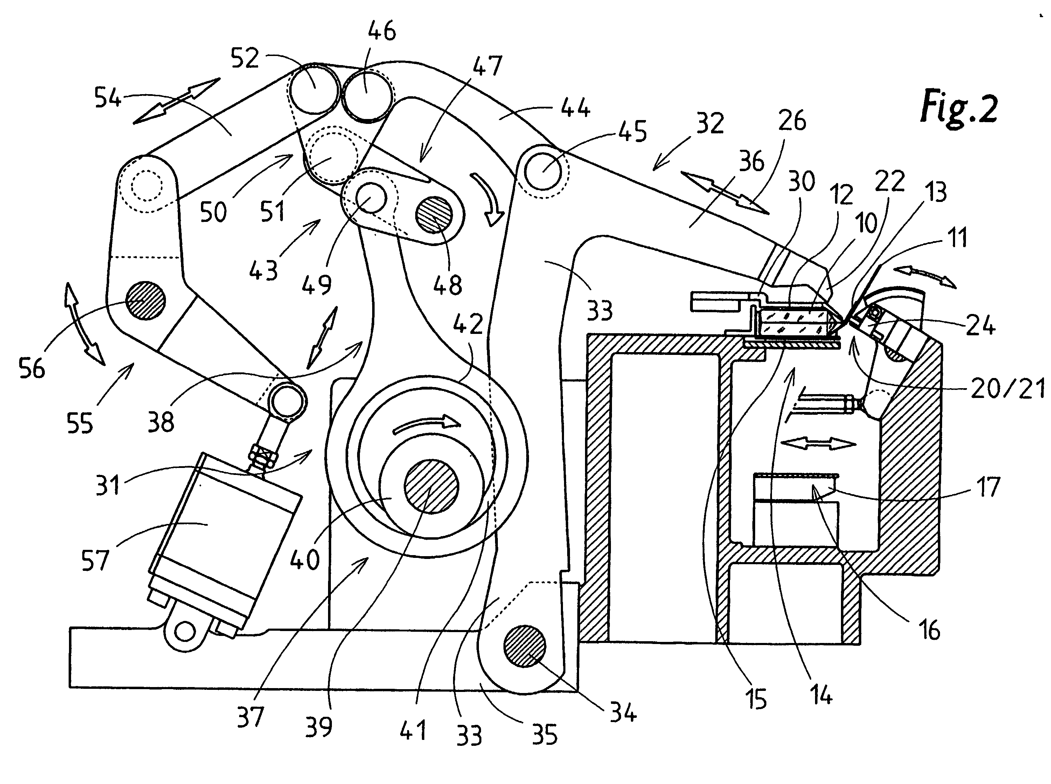

Fig. 1 und Fig. 2 zeigen zwei unterschiedliche Stellungen des Betätigungsgetriebes 31. Durch das Zusammenwirken der beschriebenen Organe wird erreicht, dass in der Position gemäß Fig. 1 trotz fortgesetzter Drehbewegung der Welle 39 und des Kurbeltriebs 37 der Schenkel 36 und damit die Siegelbacke 22 oder die Gegenbacke 25 zeitweilig still steht, nämlich zur Durchführung eines Siegeltaktes.

Eine weitere Besonderheit besteht darin, dass das gesamte Betätigungsgetriebe 31, einschließlich Betätigungsarm 32 mit Siegelbacken 22 bzw. Gegenbacken 24 aus der Betriebsstellung heraus bewegbar sind, insbesondere zu Wartungs- oder Reparaturzwecken. Zu diesem Zweck ist das Festlager 53 mit einem Rückführgetriebe verbunden, nämlich einem (zweiarmigen) Stellhebel 55. Dieser ist um ein Schwenklager 56 schwenkbar. Durch entsprechende Betätigung des Stellhebels 55 wird das Festlager 53 zurückgezogen unter Mitnahme des Betätigungsgetriebes 31. Für diese Bewegung ist ein Druckmittelzylinder 57 vorgesehen, der mit einer Kolbenstange das freie Ende des Stellhebels 55 beaufschlagt.

Das im Aufbau und Funktion beschriebene Betätigungsgetriebe 31 kann auch für die Betätigung bzw. Bewegung anderer Organe mit entsprechendem Anforderungsprofil eingesetzt werden.

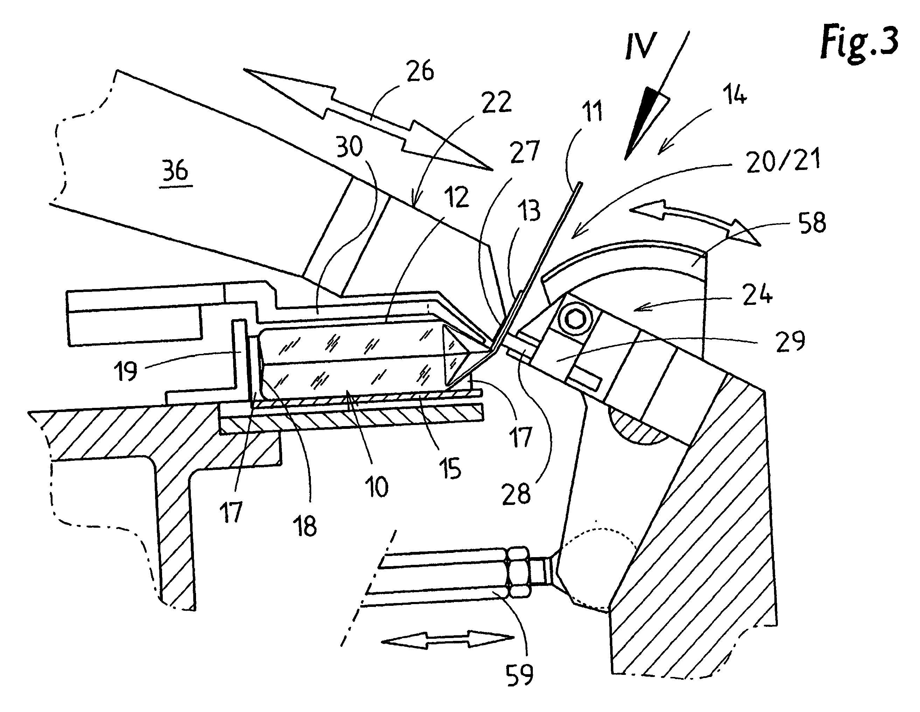

Die durch Siegeln gebildete Einheit aus Schließlappen 11 und Gegenlappen 13 wird im Anschluss an die Siegelstation 14 gegen die freie Vorderseite 12 des Beutels 10 umgefaltet und durch Klebung oder durch Tape fixiert. Hierzu ist ein insbesondere in Fig. 3 dargestelltes, segmentartiges Faltorgan 58 erkennbar, welches durch eine Schubstange 59 schwenkbar ist zum Umfalten des Schließlappens 11.

### Bezugszeichenliste:

- 10: Beutel
- 11: Schließlappen
- 12: Vorderseite
- 13: Gegenlappen
- 14: Siegelstation
- 15: Obergurt
- 16: Packungsförderer
- 17: Trennwand
- 18: Bodenfläche
- 19: Seitenführung
- 20: Siegeleinheit
- 21: Siegeleinheit
- 22: Siegelbacke
- 23: Siegelbacke
- 24: Gegenbacke
- 25: Gegenbacke
- 26: Doppelpfeil
- 27: Siegelfläche
- 28: Streifen
- 29: Halterung
- 30: Abdeckung
- 31: Betätigungsgetriebe
- 32: Betätigungsarm
- 33: Schenkel
- 34: Lager
- 35: Tragplatte
- 36: Schenkel
- 37: Kurbeltrieb
- 38: Kurbelarm
- 39: Welle
- 40: Ring
- 41: Wälzlager
- 42: Lageröffnung
- 43: Koppelgetriebe
- 44: Lenker
- 45: Lager
- 46: Schwenklager
- 47: Koppelglied
- 48: Festlager
- 49: Drehlager
- 50: Koppelglied
- 51: Drehlager
- 52: Lager
- 53: Festlager
- 54: Lenker
- 55: Stellhebel
- 56: Schwenklager
- 57: Druckmittelzylinder
- 58: Faltorgan
- 59: Schubstange

## Patentansprüche

1. Vorrichtung zum Herstellen bzw. Verschließen von Packungen mit mehrlagigen Faltlappen durch thermisches Siegeln mit Hilfe von beheizten Siegelbacken, insbesondere zum Verschließen von Folien-Beuteln (10) mit Schließlappen (11), **gekennzeichnet durch** folgende Merkmale:
a) eine Siegelstation (14) **durch** welche die Packungen bzw. Beutel (10) taktweise hindurchförderbar sind mit mehreren aufeinanderfolgenden Siegeleinheiten (20, 21) aus beheizter Siegelbacke (22, 23) einerseits und nicht beheizten Gegenbacke (24, 25) andererseits, zwischen denen die Faltlappen oder Schließlappen (11) mit Gegenlappen (13) zum Siegeln Aufnahme finden,
b) die Siegelbacken (22, 23) und Gegenbacken (24, 25) sind von Siegeleinheit (20) zu Siegeleinheit (21) auf wechselnden Seiten in Bezug auf Faltlappen oder Schließlappen (11, 13) positioniert, derart, dass im Bereich der einen Siegeleinheit (20) die Siegelbacken (22) auf der einen und im Bereich der nächsten Siegeleinheit (21) die Siegelbacken (23) auf der gegenüberliegenden Seite der Faltlappen oder Schließlappen (11, 13) positioniert sind.

2. Vorrichtung nach Anspruch 1, **dadurch gekennzeichnet, dass** mindestens die Gegenbacke (24, 25) eine elastisch verformbare Anlagefläche für Faltlappen oder Schließlappen (11, 13) aufweist, insbesondere einen Belag aus elastisch verformbarem, wärmebeständigem Werkstoff, wobei die Faltlappen oder SchlieBlappen (11, 13) durch die Siegelbacke (22, 23) gegen den elastischen Belag - vorzugsweise aus Silikon - der Gegenbacke (24, 25) drückbar sind.

3. Vorrichtung nach Anspruch 2, **dadurch gekennzeichnet, dass** der elastische Belag der Gegenbacken (24, 25) aus einem Streifen (28) des elastischen, wärmebeständigen Materials besteht, wobei der Streifen (28) sich über die volle Länge der Gegenbacke (24, 25) erstreckt und mit Endbereichen seitlich in Halterungen (29) lösbar verankert ist.

4. Vorrichtung nach Anspruch 1 oder einem der weiteren Ansprüche, **dadurch gekennzeichnet, dass** die Siegelbacken (22, 23) und die Gegenbacken (24, 25) jeweils in schräg zur Förderebene der Beutel (10) - unter einem Winkel von etwa 30°- gerichtet sind.

5. Vorrichtung nach Anspruch 1 oder einem der weiteren Ansprüche, **dadurch gekennzeichnet, dass** die auf einer Seite der zu siegelnden Faltlappen bzw. Schließlappen (11, 13) positionierten Backen, insbesondere je eine Siegelbacke (22) und eine Gegenbacke (24), zu einer Betätigungseinheit miteinander verbunden und gemeinsam durch ein Betätigungsgetriebe (31) bewegbar sind.

6. Vorrichtung nach Anspruch 1, **dadurch gekennzeichnet, dass** die Siegelbacke (22) oder die Gegenbacke (24) durch ein Betätigungsgetriebe (31) hin- und herbewegbar ist, bei dem ein kontinuierlich drehend angetriebener Kurbeltrieb (37) über einen schwenkbar, ortsfest gelagerten Betätigungsarm (32) mit der zu bewegenden Siegelbacke (22) oder Gegenbacke (24) und der Betätigungsarm (32) mit dem Kurbeltrieb (37) über ein Koppelgetriebe (43) verbunden ist, derart, dass die angetriebene Siegelbacke (22) oder Gegenbacke (24) während einer Umdrehung des Kurbeltriebs (37) eine Stillstandsphase aufweist.

7. Vorrichtung nach Anspruch 6, **dadurch gekennzeichnet, dass** der Kurbeltrieb (37) auf einer vorzugsweise mit einer Maschine verbundenen Welle (39) gelagert und ein Kurbelarm (38) mit einem ersten Koppelglied (47) des Koppelgetriebes (43) schwenkbar verbunden ist, wobei das Koppelglied (47) um ein Festlager (48) schwenkbar und mit einem zweiten Koppelglied (50) verbunden ist.

8. Vorrichtung nach Anspruch 7, **dadurch gekennzeichnet, dass** das Koppelgetriebe (43) bzw. dessen zweites Koppelglied (50) schwenkbar über ein Zwischenglied, nämlich über einen Lenker (44), mit dem winkelförmig ausgebildeten Betätigungsarm (32) verbunden ist.

9. Vorrichtung nach Anspruch 7 oder 8, **dadurch gekennzeichnet, dass** das Koppelgetriebe (43) bzw. dessen Koppelglied (50) mit einem Festlager (53) verbunden ist, und zwar über einen schwenkbar gelagerten Lenker (54).

10. Vorrichtung nach Anspruch 6 oder einem der weiteren Ansprüche, **dadurch gekennzeichnet, dass** das Betätigungsgetriebe (31) in eine von der Betriebsstellung entfernt liegende Position bewegbar ist, insbesondere unter Verschwenken des Betätigungsarms (32) durch ein Stellgetriebe mit einem Druckmittelzylinder (57), wobei das Stellgetriebe vorzugsweise einen schwenkbar gelagerten Stellhebel (55) aufweist, an dessen einem Ende das Festlager (53) für das Koppelglied (50) gebildet ist.

## Claims

1. Apparatus for producing and closing packs with multi-layered folding flaps by heat sealing with the aid of heated sealing jaws, in particular for closing sheet-material bags (10) with closing flaps (11), **characterized by** the following features:
a) a sealing station (14), through which the packs or bags (10) can be conveyed cyclically, having a plurality of successive sealing units (20, 21) comprising a heated sealing jaw (22, 23), on the one hand and non-heated mating jaw (24, 25), on the other hand, between which the folding or closing flaps (11) with mating flaps (13) are accommodated for sealing purposes,
b) from sealing unit (20) to sealing unit (21), the sealing jaws (22, 23) and mating jaws (24, 25) are positioned on alternate sides in relation to the folding or closing flaps (11, 13) such that in the region of one sealing unit (20) the sealing jaws (22) are positioned on one side, and in the region of the next sealing unit (21) the sealing jaws (23) are positioned on the opposite side, of the folding or closing flaps (11, 13).

2. Apparatus according to Claim 1, **characterized in that** at least the mating jaw (24, 25) has an elastically deformable abutment surface for folding or closing flaps (11, 13), in particular a coating made of elastically deformable, heat-resistant material, it being possible for the folding or closing flaps (11, 13) to be forced against the elastic coating - preferably made of silicone - of the mating jaw (24, 25) by the sealing jaw (22, 23).

3. Apparatus according to Claim 2, **characterized in that** the elastic coating of the mating jaws (24, 25) comprise of a strip (28) of the elastic, heat-resistant material, the strip (28) extending over the entire length of the mating jaw (24, 25) and being anchored laterally in a releasable manner, by way of end regions, in securing means (29).

4. Apparatus according to Claim 1, **characterized in that** the sealing jaws (22, 23) and the mating jaws (24, 25) are each directed obliquely - at an angle of approximately 30° - to the conveying plane of the bag (10).

5. Apparatus according to Claim 1, **characterized in that** the jaws positioned on one side of the folding or closing flaps (11, 13) which are to be sealed, in particular a sealing jaw (22) and a mating jaw (24) in each case, are connected to one another to form an actuating unit and can be moved jointly by an actuating mechanism (31).

6. Apparatus according to Claim 1, **characterized in that** the sealing jaw (22) or the mating jaw (24) can be moved back and forth by an actuating mechanism (31) in which a crank mechanism (37) which is driven continuously in rotation is connected, via an actuating arm (32) which is mounted in a stationary manner such that it can be pivoted, to the sealing jaw (22) or mating jaw (24) which is to be moved, and the actuating arm (32) is connected to the crank mechanism (37) via a coupling mechanism (43), such that the driven sealing jaw (22) or mating jaw (24) has a standstill phase during a revolution of the crank mechanism (37).

7. Apparatus according to Claim 6, **characterized in that** the crank mechanism (37) is mounted on a shaft (39) preferably connected to a machine, and a crank arm (38) is connected pivotably to a first coupling member (47) of the coupling mechanism (43), the coupling member (47) being pivotable about a fixed bearing (48) and being connected to a second coupling member (50).

8. Apparatus according to Claim 7, **characterized in that** the coupling mechanism (43) or the second coupling member (50) thereof is connected pivotably via an intermediate member, namely via a link (44), to the angle actuating arm (32).

9. Apparatus according to Claim 7 or 8, **characterized in that** the coupling mechanism (43) or the coupling member (50) thereof is connected to a fixed bearing (53), to be precise via a pivotably mounted link (54).

10. Apparatus according to Claim 6 or one of the further claims, **characterized in that** the actuating mechanism (31) can be moved into a position remote from the operating position, in particular with the actuating arm (32) being pivoted by an actuating mechanism with a pressure-medium cylinder (57), the actuating mechanism preferably having a pivotably mounted actuating lever (55), at one end of which the fixed bearing (53) for the coupling member (50) is formed.

## Revendications

1. Dispositif pour la fabrication ou la fermeture de paquets à volets multicouches par soudage thermique à l'aide de mâchoires de soudage chauffées, en particulier pour la fermeture de sacs en feuille (10) à volets de fermeture (11), **caractérisé par** les caractéristiques suivantes :
a) un poste de soudage (14) traversé en cadence par les paquets ou les sacs (10) et ayant plusieurs unités de soudage successives (20, 21) formées d'une part d'une mâchoire de soudage chauffée (22, 23) et d'autre part d'une contre-mâchoire non chauffée (24, 25) entre lesquelles les volets ou les volets de fermeture (11) avec contre-volets (13) se placent pour le soudage,
b) les mâchoires de soudage (22, 23) et les contre-mâchoires (24, 25) sont, d'une unité de soudage (20) à la suivante (21), placées sur des côtés alternants par rapport aux volets ou aux volets de fermeture (11, 13), de façon telle que dans la zone d'une unité de soudage (20), les mâchoires de soudage (22) soient placées sur un côté des volets ou des volets de fermeture (11, 13), et dans la zone de l'unité de soudage voisine (21), les mâchoires de soudage (23) soient placées sur le côté opposé des volets ou des volets de fermeture (11, 13).

2. Dispositif selon la revendication 1, **caractérisé par le fait que** les contre-mâchoires (24, 25) présentent une surface d'appui déformable élastiquement pour les volets ou les volets de fermeture (11, 13), en particulièrement un revêtement en matière déformable élastiquement résistant à la chaleur, la mâchoire de soudage (22, 23) pouvant presser les volets ou les volets de fermeture (11, 13) contre le revêtement élastique, de préférence en silicone, de la contre-mâchoire (24, 25).

3. Dispositif selon la revendication 2, **caractérisé par le fait que** le revêtement élastique des contre-mâchoires (24, 25) est constitué d'une bande (28) de la matière élastique résistant à la chaleur, cette bande (28) s'étendant sur toute la longueur de la contre-mâchoire (24, 25) et étant ancrée de la manière détachable, latéralement par des parties d'extrémité, dans des supports (29).

4. Dispositif selon la revendication 1 ou une des autres revendications, **caractérisé par le fait que** les mâchoires de soudage (22, 23) et les contre-mâchoires (24 25) sont dirigées obliquement par rapport au plan de transport des sacs (10) en faisant avec celui-ci un angle d'environ 30°.

5. Dispositif selon la revendication 1 ou une des autres revendications, **caractérisé par le fait que** les mâchoires situées sur un côté des volets ou des volets de fermeture (11, 13) à souder, en particulier une mâchoire de soudage (22) et une contre-mâchoire (24), sont réunies en un ensemble d'actionnement et mues ensemble par un mécanisme d'actionnement (31).

6. Dispositif selon la revendication 1, **caractérisé par le fait que** la mâchoire de soudage (22) ou la contre-mâchoire (24) est soumise à un mouvement de va-et-vient par un mécanisme d'actionnement (31) dans lequel un mécanisme à manivelle (37) soumis à une rotation continue est relié par un bras d'actionnement monté à un endroit fixe et tournant (32) à la mâchoire de soudage (22) ou la contre-mâchoire (24) à mouvoir, et le bras d'actionnement (32) est relié au mécanisme à manivelle (37) par un mécanisme d'accouplement (43) de façon telle que la mâchoire de soudage (22) ou la contre-mâchoire (24) entraînée présente une phase d'arrêt pendant un tour du mécanisme à manivelle (37).

7. Dispositif selon la revendication 6, **caractérisé par le fait que** le mécanisme à manivelle (37) est monté sur un arbre (39) de préférence lié à une machine, et un bras de manivelle (38) est joint de manière articulée à un premier élément d'accouplement (47) du mécanisme d'accouplement (43), l'élément d'accouplement (47) pouvant tourner autour d'un palier fixe (48) et étant lié à un deuxième élément d'accouplement (50).

8. Dispositif selon la revendication 7, **caractérisé par le fait que** le mécanisme d'accouplement (43), plus précisément son deuxième élément d'accouplement (50), est relié de manière articulée par un élément intermédiaire, à savoir par une biellette (44), au bras d'actionnement, coudé (32).

9. Dispositif selon l'une des revendications 7 et 8, **caractérisé par le fait que** le mécanisme d'accouplement (43), plus précisément son élément d'accouplement (50), est relié à un palier fixe (53) par une biellette montée tournante (54).

10. Dispositif selon la revendication 6 ou une des autres revendications, **caractérisé par le fait que** le mécanisme d'actionnement (31) peut être mis dans une position éloignée de sa position de fonctionnement, en particulier avec rotation du bras d'actionnement (32) par un mécanisme de manoeuvre comportant un vérin (57), le mécanisme de manoeuvre présentant de préférence un levier de manoeuvre monté tournant (55) à une extrémité duquel est formé le palier fixe (53) pour l'élément d'accouplement (50).
